# EUROPEAN PATENT APPLICATION

(11) **EP 4 246 533 A1**
(43) Date of publication of application: **20.09.2023**
(21) Application number: 21892433.0
(22) Date of filing: 09.11.2021
(51) Int. Cl.: G21C 9/016

(54) **SYSTEM FOR CONFINING AND COOLING MELT FROM THE CORE OF A NUCLEAR REACTOR**

(30) Priority: 10.11.2020 RU 2020136905
(71) Applicant: Joint Stock Company "Atomenergoproekt", Moscow 105005 (RU); Science and Innovations - Nuclear Industry Scientific Development, Private Enterprise, Moscow 119017 (RU)
(72) Inventor: SIDOROV, Aleksandr Stalevich, Moscow 115612 (RU); SIDOROVA, Nadezhda Vasilievna, Moscow 115612 (RU); DZBANOVSKAYA, Tatyana Yaropolkovna, Moscow 107113 (RU); BADEZHKO, Kseniya Konstantinovna, Volgograd 400066 (RU)
(74) Representative: Osmans, Voldemars
(86) International application number: PCT/RU2021/000493
(87) International publication number: WO 2022/103302

(57) **Abstract**

The invention relates to the field of nuclear energy, in particular, to the systems ensuring safety of nuclear power plants (NPPs), and can be used in severe accidents resulting in destruction of the reactor pressure vessel and containment.

The technical result of the claimed invention is to enhance reliability of the corium localizing and cooling system of a nuclear reactor.

The technical result is achieved due to use of the membrane installed between the cantilever truss and the vessel, bandage plates installed on the external and internal side of the membrane, the hydraulic gas-dynamic damper installed on the internal side of the membrane in the corium localizing and cooling system of a nuclear reactor enabling to prevent any destruction within the leak-tight junction area between the multi-layered vessel and the cantilever truss under the conditions with non-axisymmetric corium flow from the reactor pressure vessel and falling of reactor pressure vessel head fragments into the vessel at the initial stage of the corium cooling with water.

## Description

### Technical field of the invention

The invention relates to the field of nuclear energy, in particular, to the systems ensuring safety of nuclear power plants (NPPs), and can be used in severe accidents resulting in destruction of the reactor pressure vessel and containment.

Accidents with core meltdown that can take place in case of multiple failures of the core cooling systems pose the greatest radiation hazard.

In the course of such accidents the core melt - corium - escapes from the reactor pressure vessel by melting it as well as the core structures, and afterheat remaining in it may break the integrity of the NPP containment - the last barrier in the routes for release of radioactive products to the environment.

In order to prevent this it is required to localize the core melt (corium) escaping from the reactor pressure vessel and provide its continuous cooling up to its complete crystallization. This function is performed by the corium localizing and cooling system of the nuclear reactor which prevents damage to the NPP containment and thus protects the public and the environment against radiation exposure in case of any severe accidents of nuclear reactors.

### Prior art

A corium localizing and cooling system [1] of a nuclear reactor, comprising a guide plate installed under the reactor pressure vessel and resting upon a cantilever truss, a multi-layered vessel installed on embedded parts in the concrete shaft foundation with a flange equipped with thermal protection, and a filler inside the multi-layered vessel consisting of a set of cassettes installed onto each other is known.

This system has low reliability due to the following drawbacks:
- in case of non-axisymmetric escape of the corium from the reactor pressure vessel (lateral melt-through of the pressure vessel) sectoral destruction of the guide plate, the cantilever truss and thermal protections takes place in the reactor pressure vessel under the impact of internal pressure, and the shock wave of gas escaping together with the corium from the reactor pressure vessel propagates inside the multi-layered vessel volume and inside the peripheral volumes located between the multi-layered vessel, the filler and the cantilever truss and impacts the peripheral equipment that can result in destruction of the corium localizing and cooling system within the junction area between the multi-layered vessel and the cantilever truss causing ingress of cooling water intended for external cooling of the multi-layered vessel into the multi-layered vessel which can lead to a steam explosion and destruction of the system;
- in case of falling of the reactor pressure vessel head fragments or falling of the corium remnants from the reactor pressure vessel into the multi-layered vessel at the initial stage of the corium surface cooling with water shock-induced pressure increase takes place and affects the peripheral equipment that can result in destruction of the corium localizing and cooling system within the junction area between the multi-layered vessel and the cantilever truss causing ingress of cooling water intended for external cooling of the multi-layered vessel into the multi-layered vessel which can lead to a steam explosion and destruction of the system.

A corium localizing and cooling system [2] of a nuclear reactor, comprising a guide plate installed under the reactor pressure vessel and resting upon a cantilever truss, a multi-layered vessel installed on embedded parts in the concrete shaft foundation with a flange equipped with thermal protection, and a filler inside the multi-layered vessel consisting of a set of cassettes installed onto each other is known.

This system has low reliability due to the following drawbacks:
- in case of non-axisymmetric escape of the corium from the reactor pressure vessel (lateral melt-through of the pressure vessel) sectoral destruction of the guide plate, the cantilever truss and thermal protections takes place in the reactor pressure vessel under the impact of internal pressure, and the shock wave of gas escaping together with the corium from the reactor pressure vessel propagates inside the multi-layered vessel volume and inside the peripheral volumes located between the multi-layered vessel, the filler and the cantilever truss and impacts the peripheral equipment that can result in destruction of the corium localizing and cooling system within the junction area between the multi-layered vessel and the cantilever truss causing ingress of cooling water intended for external cooling of the multi-layered vessel into the multi-layered vessel which can lead to a steam explosion and destruction of the system;
- in case of falling of the reactor pressure vessel head fragments or falling of the corium remnants from the reactor pressure vessel into the multi-layered vessel at the initial stage of the corium surface cooling with water shock-induced pressure increase takes place and affects the peripheral equipment that can result in destruction of the corium localizing and cooling system within the junction area between the multi-layered vessel and the cantilever truss causing ingress of cooling water intended for external cooling of the multi-layered vessel into the multi-layered vessel which can lead to a steam explosion and destruction of the system.

A corium localizing and cooling system [3] of a nuclear reactor, comprising a guide plate installed under the reactor pressure vessel and resting upon a cantilever truss, a multi-layered vessel installed on embedded parts in the concrete vault foundation with a flange equipped with thermal protection, and a filler inside the multi-layered vessel consisting of a set of cassettes installed onto each other is known.

This system has low reliability due to the following drawbacks:
- in case of non-axisymmetric escape of the corium from the reactor pressure vessel (lateral melt-through of the pressure vessel) sectoral destruction of the guide plate, the cantilever truss and thermal protections takes place in the reactor pressure vessel under the impact of internal pressure, and the shock wave of gas escaping together with the corium from the reactor pressure vessel propagates inside the multi-layered vessel volume and inside the peripheral volumes located between the multi-layered vessel, the filler and the cantilever truss and impacts the peripheral equipment that can result in destruction of the corium localizing and cooling system within the junction area between the multi-layered vessel and the cantilever truss causing ingress of cooling water intended for external cooling of the multi-layered vessel into the multi-layered vessel which can lead to a steam explosion and destruction of the system;
- in case of falling of the reactor pressure vessel head fragments or falling of the corium remnants from the reactor pressure vessel into the multi-layered vessel at the initial stage of the corium surface cooling with water shock-induced pressure increase takes place and affects the peripheral equipment that can result in destruction of the corium localizing and cooling system within the junction area between the multi-layered vessel and the cantilever truss causing ingress of cooling water intended for external cooling of the multi-layered vessel into the multi-layered vessel which can lead to a steam explosion and destruction of the system.

### Disclosure of the invention

The technical result of the claimed invention is to enhance reliability of the corium localizing and cooling system of a nuclear reactor.

The objective, which the claimed invention is intended to achieve, is to prevent destruction of the corium localizing and cooling system within the junction area between the vessel and the cantilever truss under the conditions on non-axisymmetric corium escape from the reactor pressure vessel and falling of the reactor pressure vessel head fragments into the vessel at the initial stage of the corium cooling with water, and consequently to prevent any ingress of water intended for external cooling of the vessel into the vessel.

The set objective is achieved due to the fact that in accordance with the invention the corium localizing and cooling system of a nuclear reactor, comprising a guide plate, a cantilever truss, a vessel with a filler intended for the corium receipt and distribution additionally comprises a convex membrane with the upper and lower flanges connected to the upper and lower heat-conducting elements respectively that are attached to the cantilever truss and the vessel flange, bandage plates installed on the external and internal side of the membrane in such a way so that their upper and lower ends are fastened rigidly to the upper and lower flanges of the membrane, a hydraulic-and-gas mechanical damper consisting of external and internal sectoral shells with the upper ends connected to the upper heat-conducting element, and the lower ends connected to the vessel flange and the lower heat-conducting element.

Presence of the convex membrane with the upper and lower flanges connected to the upper and lower heat-conducting elements attached to the cantilever truss and the vessel flange, equipped with the bandage plates installed on the external and internal sides of the membrane in such a way so that their upper and lower ends are fastened rigidly to the upper and lower flanges with the use of weld joints thus enabling to provide for independent radial and azimuthal thermal expansions of the cantilever truss, independent movement of the cantilever truss and the vessel in case of any mechanical shock impacts on the components of the corium localizing and cooling system equipment, axial and radial thermal expansions of the vessel, and consequently to prevent any ingress of water intended for external cooling of the vessel into the vessel in the corium localizing and cooling system of a nuclear reactor is an essential feature of the claimed invention. The bandage plates, in their turn, enable to maintain integrity of the membrane under the impact of any shock wave on the reactor pressure vessel side in case of its destruction and also to maintain integrity of the membrane under the impact of any shock wave generated at the initial stage of the corium surface cooling with water in case of falling of any reactor pressure vessel head fragments or corium remnants into the corium.

Presence of a hydraulic-and-gas mechanical damper consisting of external and internal sectoral shells with the upper ends connected to the upper heat-conducting element and the lower ends connected to the flange and the lower heat-conducting element in the corium localizing and cooling system of a nuclear reactor is another essential feature of the claimed invention enabling to prevent any direct shock impact of the corium as well as the gas-dynamic streams from the reactor pressure vessel on the leak-tight junction area between the vessel and the cantilever truss. The functional capacities of the double-sided hydraulic-and-gas mechanical damper enable to provide the required hydrodynamic resistance in the course of the steam-gas mixture flow from the inner volume of the reactor pressure vessel to the space located behind the external surface of the double-sided hydraulic-and-gas mechanical damper - behind the external sectoral shell - and limited with the internal surface of the membrane which in its turn enables to reduce the rate of pressure increase on the internal membrane surface with simultaneous extension of the pressure increase time. Thus, the double-sided hydraulic-and-gas mechanical damper enables to extend the time period required for pressure equalizing inside and outside the vessel and consequently to reduce the maximum pressure value in order to maintain the membrane integrity (strength and leaktightness).

In addition, according to the invention, the upper end of the hydraulic-and-gas mechanical damper in the corium localizing and cooling system of a nuclear reactor is connected to the upper heat-conducting element with the use of the upper fasteners, and the lower end is connected to the lower heat-conducting element via an end stop with the use of the lower fasteners.

In addition, according to the invention, the upper end of the hydraulic-and-gas mechanical damper in the corium localizing and cooling system of a nuclear reactor is rigidly connected to the upper heat-conducting element with the use of a weld joint, and the lower end is connected to the vessel flange via an end stop with the use of the lower fasteners. In this case the lower fasteners may be additionally equipped with a safety locking plate.

In addition, according to the invention, an aperture is made in the lower ends of the bandage plates and the membrane flange in the corium localizing and cooling system of a nuclear reactor, and a fastener equipped with an adjusting nut and a retainer is installed in this aperture.

In addition, according to the invention, apertures are made at the attachment points in the sectors of the external and internal sectoral shells of the hydraulic-and-gas mechanical damper in the corium localizing and cooling system of a nuclear reactor.

In addition, according to the invention, the sectors of the external and internal sectoral shells in the corium localizing and cooling system of a nuclear reactor are installed with sectoral gaps.

In addition, according to the invention, the external and internal sectoral shells of the hydraulic-and-gas damper in the corium localizing and cooling system of a nuclear reactor are installed with a radial gap in relation to each other.

In addition, according to the invention, an intermediate sectoral shell is installed in the corium localizing and cooling system of a nuclear reactor between the external and internal sectoral shells of the hydraulic gas-dynamic damper.

In addition, according to the invention, the number of intermediate sectoral shells of the hydraulic gas-dynamic damper in the corium localizing and cooling system of a nuclear reactor may be selected from 2 to 4.

### Brief description of drawings

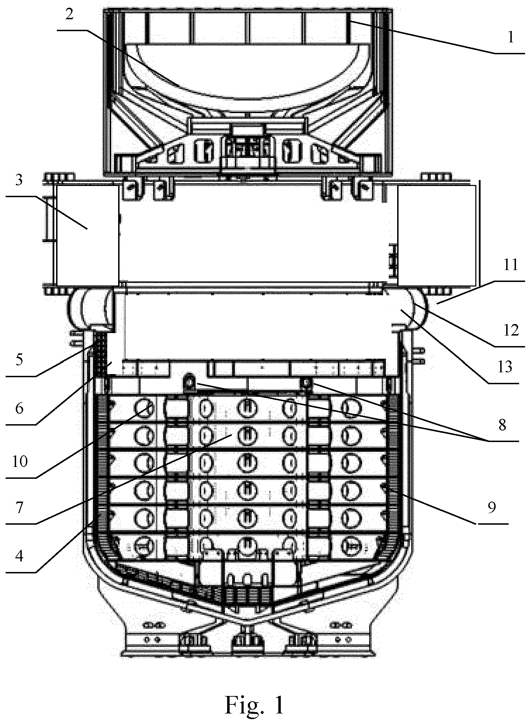

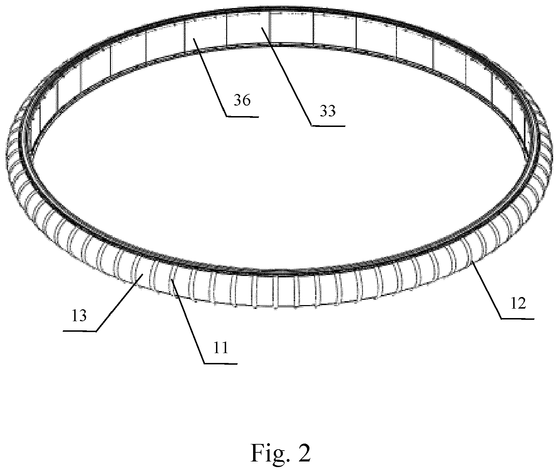

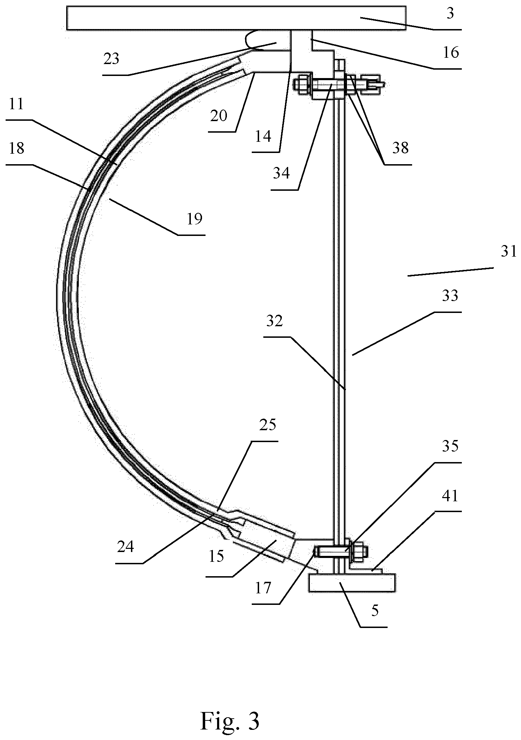

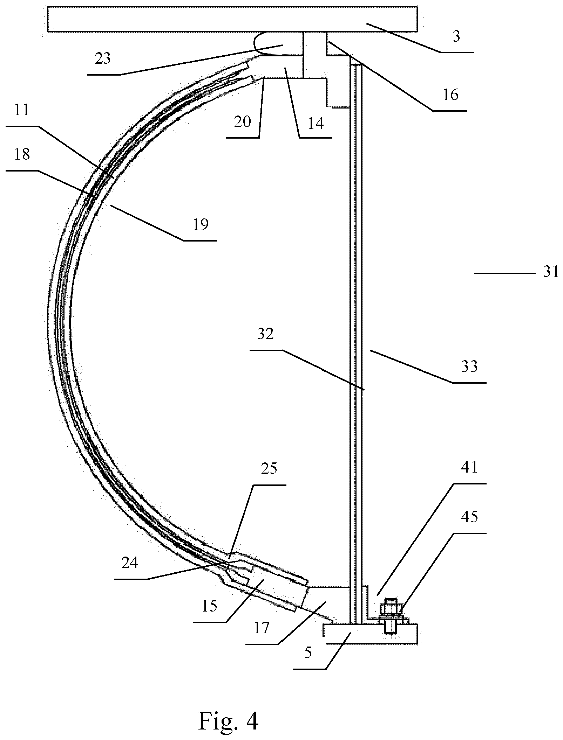

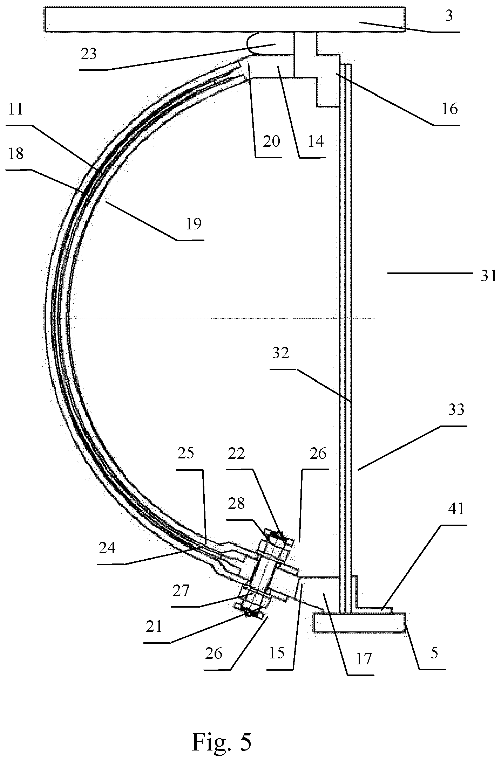

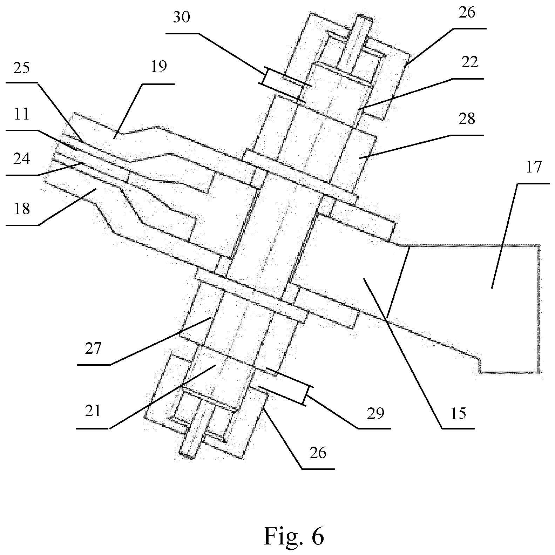

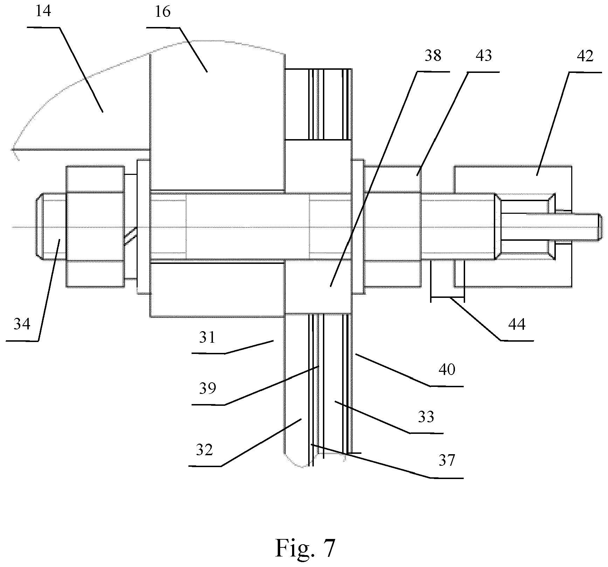

The corium localizing and cooling system of a nuclear reactor arranged in accordance with the claimed invention is shown in Fig. 1.
The membrane with the hydraulic-and-gas mechanical damper arranged in accordance with the claimed invention is presented in Fig. 2.
The membrane with the hydraulic-and-gas mechanical damper arranged in accordance with the claimed invention is presented in Fig. 3.
The membrane with the hydraulic-and-gas mechanical damper arranged in accordance with the claimed invention is presented in Fig. 4.
The membrane with the hydraulic-and-gas mechanical damper arranged in accordance with the claimed invention is presented in Fig. 5.
The membrane fastener arranged in accordance with the claimed invention is shown in Fig. 6.
The hydraulic gas-dynamic damper fastener arranged in accordance with the claimed invention is shown in Fig. 7.

### Embodiments of the invention

As shown in Figs. 1-7, the corium localizing and cooling system of a nuclear reactor comprises the guide plate (1) installed under the nuclear reactor pressure vessel (2). The guide plate (1) rests upon the cantilever truss (3). The vessel (4) is located under the cantilever truss (3) in the concrete shaft foundation. The flange (5) of the vessel (4) is equipped with thermal protection (6). The filler (7) intended for the corium receipt and distribution is located inside the vessel (4). For example, the filler (7) may consist of cassettes (9) with various types of apertures (10) arranged in them. Water supply valves (8) installed in branch pipes are located along the vessel (4) periphery in its upper section (within the area between the filler (7) and the flange (5) of the vessel (4)). The convex membrane (11) consisting of vertically oriented sectors (12) connected with weld joints (13) is installed between the flange (5) of the vessel (4) and the lower surface of the cantilever truss (3). The convex side of the membrane (11) is directed outside the vessel (4) boundaries. A sort of a convective heat exchange pocket (23) with the upper heat-conducting element (16) connected to the upper flange (14) of the membrane (11) is arranged in the upper section of the convex membrane (11) within the junction with the lower section of the cantilever truss (3), and the lower heat-conducting element (17) connected to the lower flange (15) of the membrane (11) is arranged in the lower section of the membrane (11).

External bandage plates (18) with external fasteners (21) providing for the external safety bandage gap (24) are installed along the external surface of the membrane (11), and internal bandage plates (19) with internal fasteners (22) providing for the internal safety bandage gap (25) are installed along the internal surface of the membrane (11).

The external and internal bandage plates (18), (19) are rigidly fastened to the upper flange (14) of the membrane (11) on one side with the use of weld joints (20), and a floating coupling to the lower flange (15) of the membrane (11) is arranged on the other side with the use of external and internal fasteners (21), (22) regulating the external and internal safety bandage gaps (24), (25), and their movement is limited by retainers (26).

The double-sided hydraulic-and-gas mechanical damper (31) consisting of the external and internal sectoral shells (32), (33) suspended on the upper and lower flanges (14), (15) of the membrane (11) with the use of the upper and lower sectoral fasteners (34), (35) is additionally installed on the upper and lower flanges (14), (15) on the internal side of the membrane (11). The sectors of the external and internal sectoral shells (32), (33) are installed with sectoral gaps (36) providing for independent work of each sector under shock impacts. The external and internal sectoral shells (32), (33) are installed with the radial gap (37) in relation to each other in order to provide for independent work of each shell in case of any minor temperature perturbations and joint work under any shock impacts. During a thermal expansion of the vessel (4) the membrane (11) starts to compress in the axial direction. The external and internal sectoral shells (32), (33) as well as the intermediate sectoral shells (39) of the double-sided hydraulic-and-gas mechanical damper (31) are arranged with free travel ensured by the upper sectoral fasteners (34) with adjusting gaps (44) set with the use of adjusting nuts (43) with the travel controlled by retainers (42) in order to provide for free mechanical movement of the membrane (11).

The claimed corium localizing and cooling system of a nuclear reactor operates as follows.

When the nuclear reactor pressure vessel (2) fails, the corium exposed to hydrostatic pressure of the corium and residual excess pressure of the gas inside the nuclear reactor pressure vessel (2) starts to flow onto the surface of the guide plate (1) held by the cantilever truss (3). The corium flowing down the guide plate (1) enters the vessel (4) and comes into contact with the filler (7). In case of sectoral non-axisymmetric corium flow, sectoral destruction of the guide plate (1) and sectoral destruction of the cantilever truss (3) takes place in the reactor pressure vessel (2) under the impact of increased pressure, and as a result, overpressure in the reactor pressure vessel (2) directly affects the hydraulic-and-gas mechanical damper (31) first, and then the membrane (11).

As shown in Figs. 3-5, the hydraulic-and-gas mechanical damper (31) installed in front of the membrane (11) on the internal side takes up the direct shock impact from the corium fragments and the dynamic gas streams moving from the reactor pressure vessel (2) to the leak-tight junction area between the vessel (4) and the cantilever truss (3). The functional capacities of the hydraulic-and-gas mechanical damper (31) enable to provide the required hydrodynamic resistance in the course of the steam-gas mixture flow from the inner volume of the reactor pressure vessel (2) to the space located behind the external surface of the hydraulic-and-gas mechanical damper (31) and to reduce the peripheral pressure increase rate with simultaneous extension of the pressure increase time, thus providing the required time for pressure equalizing inside and outside the vessel (4) and reduction of dynamic loads on the membrane (11).

The lower section of the hydraulic-and-gas mechanical damper (31) covers the internal fasteners (22) of the internal bandage plates (19) on the lower flange (15) of the membrane (11), and its upper section covers the weld joints (2) of the internal bandage plates (19) with the upper flange (14) of the membrane (11) providing protection of the membrane (11) against the impact of thermal radiation from the corium surface. The geometrical characteristics such as the thickness of the external and internal sectoral shells (32), (33), the thicknesses of additional intermediate sectoral shells (39), the dimensions of the radial gaps (37) between the shells (32), (33), (39), the relief holes (38) are selected in such a way so that in case of heating by thermal radiation from the corium surface the hydraulic-and-gas mechanical damper (31) attenuates the heat flux onto the membrane (11) down to the safe values determined by heat transfer from the membrane (11) to saturated steam under the conditions with the water level in the reactor shaft (10) below the membrane (11) installation level.

As shown in Figs. 1 and 2, the convex membrane (11) installed between the flange (5) of the vessel (4) and the lower surface of the cantilever truss (3) within the space located behind the external surface of the hydraulic-and-gas mechanical damper (31) provides for sealing of the vessel (4) in order to protect it against flooding with water supplied for its external cooling, and also for independent radial and azimuthal thermal expansions of the cantilever truss (3) as well as axial and radial thermal expansions of the vessel (4) and independent movement of the cantilever truss (3) and the vessel (4) under any mechanical shock impacts on the components of the corium localizing and cooling system equipment of a nuclear reactor. In terms of design, the membrane (11) consists of vertically oriented sectors (12) connected with each other by weld joints (13).

In order to maintain the functions of the membrane (11) at the initial stage of the corium supply from the reactor pressure vessel (2) to the vessel (4) and the related pressure increase, the membrane (11) is located within the protected space provided by the hydraulic-and-gas mechanical damper (31).

Thermal protections of the vessel (4) and the cantilever truss (3) get destroyed prior to commencement of the cooling water supply via the water supply valves (8) onto the slag cap and the thin crust formed above the corium surface. This results in increased thermal impact on the hydraulic-and-gas mechanical damper (31) on the corium surface side. The hydraulic-and-gas mechanical damper (31) partially transfers the thermal load to the membrane (11) which starts to heat on the internal side, but the radiant heat flux cannot provide the membrane (11) destruction due to its small thickness. Additional heating of the guide plate (1) and the reactor pressure vessel (2) head with the corium remnants supported by it takes place within the same period. Subsequent to start of the cooling water supply into the vessel (4) onto the crust on the corium surface, the membrane (11) continues to perform its functions for sealing of the internal space of the vessel (4) and separation of the internal and external media. In the mode of stable water cooling of the external vessel (4) surface, the membrane (11) doe not get destroyed due to cooling with water on the outer side. However, the state of the reactor pressure vessel (2) head and the small quantity of corium inside it can change that can result in falling of the reactor pressure vessel (2) head fragments with the corium remnants into the vessel (4) causing dynamic impact of the corium on thermal protection (6) of the vessel (4) flange (5) and leading to pressure increase due to interaction of the corium with water. Interaction of the corium with water is possible under the conditions when a firm crust on the corium surface has not formed yet, and the corium remnants are present on the reactor pressure vessel (2) head that is possible only within a period of time not exceeding 30 minutes in the absence of almost any water on the surface of the slag cap covering the surface of the thin crust above the corium surface at the very beginning of the corium surface cooling with water. Under these conditions the entire volume of water supplied onto the slag cap from the top evaporates and cools the structures located above. When accumulation of water on the slag cap begins, i.e. the water flow rate for evaporation starts to lag behind the water supply to the vessel (4), the crust on the corium surface begins to grow rapidly. The crust growth is non-uniform: the thickest crust is formed near the inner surface of the vessel (4), and a thin crust is formed on the corium surface in the central part of the vessel (4). Under these conditions, falling of the reactor pressure vessel (2) head fragments can break the thin crust, and the corium ejected onto the crust surface as a result of the shock impact can react with water generating a shock wave, or no collapse of the reactor pressure vessel (2) head fragments will occur, but the corium remnants will pour onto the corium crust covered with water that can also cause generation of a shock wave due to steam explosion.

The hydraulic-and-gas mechanical damper (31) is used at the first stage in order to protect the membrane (11) against destruction in the course of pressure increase inside the vessel (4), and in case of its destruction, the external and internal bandage plates (18), (19) installed on the external and internal side of the membrane (11) are used at the second stage.

The hydraulic-and-gas mechanical damper (31) takes up the shock wave at the first stage of the membrane (11) protection; the external and internal sectoral shells (32), (33) are the basic damping components thereof, and one or several intermediate sectoral shells (39) may be installed between them. Movement of the sectors forming the shell (33) in the radial direction starts under the impact of the shock wave on the internal sectoral shell (33). Independence of the deformation direction of the sectoral shells (32), (33) and (39) from the disturbing impact direction is the design peculiarity of the hydraulic-and-gas mechanical damper (31) - deformation of the shells (32), (33) and (39) occurs only in the radial direction, in this case the maximum deformation of the shells (32), (33) and (39) takes place at almost equal distance from the upper and lower sectoral fasteners (34), (35). Under the shock wave impact, the shells (32), (33) and (39) bend in the radial direction, and the slits (36) between the sectors open in the azimuthal direction. However, this does not result in the flow area increase and does not cause any reduction of hydrodynamic resistance of the shells (32), (33) and (39) to the radial flow of steam-gas mixture due to the fact that the shells (32), (33) and (39) are offset in such a way so that, for example, the slits (36) between the sectors of the external sectoral shell (32) are overlapped with the sectors of the internal sectoral shell (33) if only two sectoral shells (32) and (33) are installed. Under the impact of the shock wave on the internal sectoral shell (33), the sectors of this shell start to bend in the radial direction and transmit the forces to the adjacent sectors of the external sectoral shell (32). The stronger the impact on the internal sectoral shell (33), the greater the contact pressure force to the adjacent sectors of the external sectoral shell (32), which enables to redistribute the concentrated shock load within much larger area and consequently to protect the hydraulic-and-gas mechanical damper (31) against destruction under the impact of any localized shock load. The size of the slit (36) between the sectors determines the axial free travel for each sector of the external and internal sectoral shells (32), (33) in the course of deformation under the impact of shock loads, and the radial gap (37) between the sectoral shells (32) and (33) themselves defines the dynamical friction force between the sectors of these shells transmitted from the internal sectoral shell (33) to the external sectoral shell (32) under the shock wave impact on the internal sectoral shell (33). The smaller the radial gap (37) between the sectoral shells (32) and (33), the greater the contact pressure, the greater the friction force occurring between the shells, the smaller the displacement, and consequently, the smaller the slit (36) between the sectors in each shell (32) and (33). Use of the intermediate sectoral shells (39) enables to ensure the required strength and resistance of the hydraulic-and-gas mechanical damper (31) to localized shock loads of random direction and sectoral non-axisymmetric shock waves. Stiffness of the hydraulic-and-gas mechanical damper (31) is regulated not only with a set of sectoral shells (32), (33) and (39), the slits (36) and radial gaps (37) between the shells (32), (33) and (39), but also with the upper and lower sectoral fasteners (34), (35) with the upper and lower safety end stops (40) and (41) providing for transmission of dynamic forces from the shells (32), (33) and (39) to the upper and lower flanges (14), (15) of the membrane (11); in this case the upper sectoral fasteners (34) have the retainers (42) intended to limit the movement of the adjusting nuts (43) fixing the adjustment gap (44), and the lower sectoral fasteners (35) have the lower safety end stops (41) intended to prevent any breakage and destruction of the sectoral shell (32), (33), (39) bases under any non-axisymmetric wave impacts or local concentrated mechanical or hydrodynamic impacts; in this case the lower fasteners (35) may be additionally equipped with the safety locking plate (45).

The external and internal bandage plates (18), (19) installed on the external and internal side of the membrane (11) and ensuring fixed changes of the geometrical characteristics of the membrane (11) within the limits of the external and internal safety bandage gaps (24), (25) are used at the second stage of the membrane (11) protection against shock waves. As the shock wave in case of pressure increase propagates asymmetrically in relation to the vessel (4) axis, the impact of the shock wave on the membrane (11) will comprise both forward and backward pressure waves confronted by the external and internal bandage plates (18), (19) respectively. The external and internal bandage plates (18), (19) are located symmetrically on each side of the membrane (11) and prevent development of any oscillatory processes and resonance phenomena in the membrane (11) for considerable reduction of antinode in the membrane (11) under the impact of forward and backward pressure waves.

Upward direction is a peculiarity of the shock wave movement. Under these conditions the lower flange (15), the lower section of the membrane (11) and the lower sections of the external and internal bandage plates (18), (19) take up the shock load first. Deformation of the membrane (11) increases in the upward direction. The upper ends of the external and internal bandage plates (18), (19) are fastened rigidly (for example, with weld joints (20)) to the upper flange (14) of the membrane (11) with the fixed external and internal safety gaps (24), (25) providing for reduction of the membrane (11) deformation amplitude in the course of the upward shock wave movement in order to prevent destruction of the membrane (11).

Upon the corium entry to the filler (7) the vessel (4) is heated gradually putting compression pressure on the membrane (11). Axial and radial movement of the membrane (11) independent from the movement of the external and internal bandage plates (18), (19) shall be ensured so that the membrane (11) could perform its compensatory functions. The requirement for independence of movements is associated with considerable difference in stiffness of the membrane (11) and the external and internal bandage plates (18), (19) due to the necessity for the membrane (11) protection against the impact of shock waves. Practical independence of movements is achieved by installation of the external and internal fasteners (21), (22) providing for free movement of the external and internal bandage plates (18), (19) on the lower flange (15) of the membrane (11) with the external and internal safety bandage gaps (24), (25).

In the course of the transportation and handling operations the external and internal bandage plates (18), (19) are fixed rigidly with the use of external and internal adjusting nuts (27), (28) in order to prevent any damage of the membrane (11), and during installation into the design position the external and internal adjusting nuts (27), (28) are unscrewed all the way to the retainers (26). In this case the external and internal adjusting gaps (29), (30) providing for free upward movement of the membrane (11) lower flange (15) during thermal expansions of the vessel (4) due to sliding of the external and internal bandage plates (18), (19) along the lower flange (15) of the membrane (11) are formed.

Reliable fastening of the membrane (11) to the cantilever truss (3) and the vessel (4) shall be ensured under the impact of shock waves on the membrane (11). For this purpose, the upper flange (14) of the membrane (11) is installed on the upper heat-conducting element (16) fastened to the cantilever truss (3) forming a sort of a pocket (23) together with the upper flange (14) of the membrane (11) and the upper heat-conducting element (16) which provides for efficient heat exchange with the external medium (cooling water or steam-water mixture). The pocket (23) for convective heat exchange is required to protect the upper flange (14) of the membrane (11) and the upper heat-conducting element (16) against overheating prior to commencement of the corium surface cooling thus enabling to maintain the strength characteristics of these components for resistance to shock loads.

Heat removal in the lower section of the membrane (11) is arranged from the lower flange (15) of the membrane (11) and the lower heat-conducting element (17) providing for heat removal from the internal fasteners (22) of the internal bandage plates (19).

So, use of the membrane in combination with bandage plates and the hydraulic gas-dynamic damper in the corium localizing and cooling system of a nuclear reactor enables to enhance its reliability due to prevention of destruction within the leak-tight junction area between the vessel and the cantilever truss under the conditions with non-axisymmetric corium flow from the reactor pressure vessel and falling of reactor pressure vessel head fragments into the vessel at the initial stage of the corium cooling with water.

Sources of information:
1. Russian Patent No. 2575878, IPC G21C 9/016, priority dated 16.12.2014;
2. Russian Patent No. 2576516, IPC G21C 9/016, priority dated 16.12.2014;
3. Russian Patent No. 2576517, IPC G21C 9/016, priority dated 16.12.2014.

## Claims

1. A corium localizing and cooling system of a nuclear reactor, comprising a guide plate, a cantilever truss, a vessel with a filler intended for the corium receipt and distribution, **characterized in that** it additionally comprises a convex membrane with the upper and lower flanges connected to the upper and lower heat-conducting elements respectively that are attached to the cantilever truss and the vessel flange, bandage plates installed on the external and internal side of the membrane in such a way so that their upper and lower ends are rigidly fastened to the upper and lower flanges of the membrane, a hydraulic-and-gas mechanical damper consisting of external and internal sectoral shells with the upper ends connected to the upper heat-conducting element and the lower ends connected to the vessel flange and the lower heat-conducting element.

2. The corium localizing and cooling system of a nuclear reactor according to claim 1, **characterized in that** the upper end of the hydraulic-and-gas mechanical damper is connected to the upper heat-conducting element with the use of upper fasteners, and the lower end is connected to the lower heat-conducting element via an end stop with the use of lower fasteners.

3. The corium localizing and cooling system of a nuclear reactor according to claim 1, **characterized in that** the upper end of the hydraulic-and-gas mechanical damper is rigidly fastened to the upper heat-conducting element with the use of a weld joint, and the lower end is connected to the vessel flange via an end stop with the use of lower fasteners.

4. The corium localizing and cooling system of a nuclear reactor according to claim 3, **characterized in that** the lower fasteners are additionally equipped with a safety locking plate.

5. The corium localizing and cooling system of a nuclear reactor according to claim 1, **characterized in that** an aperture is made in the lower ends of the bandage plates and the membrane flange, and a fastener equipped with an adjusting nut and a retainer is installed in this aperture.

6. The corium localizing and cooling system of a nuclear reactor according to claim 1, **characterized in that** apertures are made at the attachment points in the external and internal sectoral shell sectors of the hydraulic-and-gas mechanical damper.

7. The corium localizing and cooling system of a nuclear reactor according to claim 1, **characterized in that** the sectors of the external and internal sectoral shells are installed with sectoral gaps.

8. The corium localizing and cooling system of a nuclear reactor according to claim 1, **characterized in that** the external and internal sectoral shells of the hydraulic gas-dynamic damper are installed with a radial gap in relation to each other.

9. The corium localizing and cooling system of a nuclear reactor according to claim 1, **characterized in that** an intermediate sectoral shell is installed between the external and internal sectoral shells of the hydraulic gas-dynamic damper.

10. The corium localizing and cooling system of a nuclear reactor according to claim 1, **characterized in that** the number of intermediate sectoral shells of the hydraulic gas-dynamic damper may be selected from 2 to 4.
